# EUROPEAN PATENT SPECIFICATION

(11) **EP 3 352 986 B1**
(45) Date of publication and mention of the grant of the patent: **03.07.2024**
(21) Application number: 16848237.0
(22) Date of filing: 21.09.2016
(51) Int. Cl.: B27M 3/00, B27M 3/08, B32B 21/13, B32B 21/04, B27G 11/00, E06B 1/04, E06B 3/10, B27B 1/00

(54) **METHOD OF FORMING A LAMINATED WOOD COMPONENT, AND LAMINATED WOOD COMPONENT THUS FORMED**
VERFAHREN ZUR HERSTELLUNG EINES LAMINIERTEN HOLZBAUTEILS UND DARAUS HERGESTELLTES LAMINIERTES HOLZBAUTEIL
PROCÉDÉ DE FORMATION D'UN COMPOSANT DE BOIS STRATIFIÉ, ET COMPOSANT DE BOIS STRATIFIÉ AINSI FORMÉ

(30) Priority: 21.09.2015 SE 1551209; 08.02.2016 SE 1650148
(43) Date of publication of application: 01.08.2018
(73) Proprietor: Stora Enso Oyj, 00101 Helsinki (FI)
(72) Inventor: HIRMKE, Markus, 3621 Rossatz-Arnsdorf (AT); SAUER, Philipp, 3522 Lichtenau (AT)
(74) Representative: Steinrud, Henrik
(86) International application number: PCT/IB2016/055622
(87) International publication number: WO 2017/051321

(56) References cited:
- EP-A1- 1 125 701
- WO-A1-89/04747
- WO-A1-2016/203416
- GB-A- 1 176 127
- US-A- 2 544 935
- US-A- 3 961 654
- US-A- 3 961 654
- US-A- 3 989 078
- US-A- 4 111 247
- US-A- 4 111 247
- US-A- 4 122 878
- US-A- 4 476 663
- US-A- 5 816 015
- US-A- 5 985 398
- US-A- 5 985 398
- US-A1- 2001 032 683

## Description

### Technical Field

The present disclosure relates to a method of forming wood components, which have good dimensional stability. Such wood components are particularly suitable for use in frames for doors and windows.

More particularly the invention relates to a laminated wood component according to the preamble of claim 1. Such a laminated wood component is known from EP1 125 701 A1.

The present invention also relates to a method of forming such a laminated wood component.

### Background

Certain laminated wood components are subjected to greater requirements for dimensional stability than others. One example of such components is the components from which structures such as door frames and window frames are made.

These are structures that need to maintain exact tolerances over a long period of time in spite of being subjected to varying degrees of moisture and temperature.

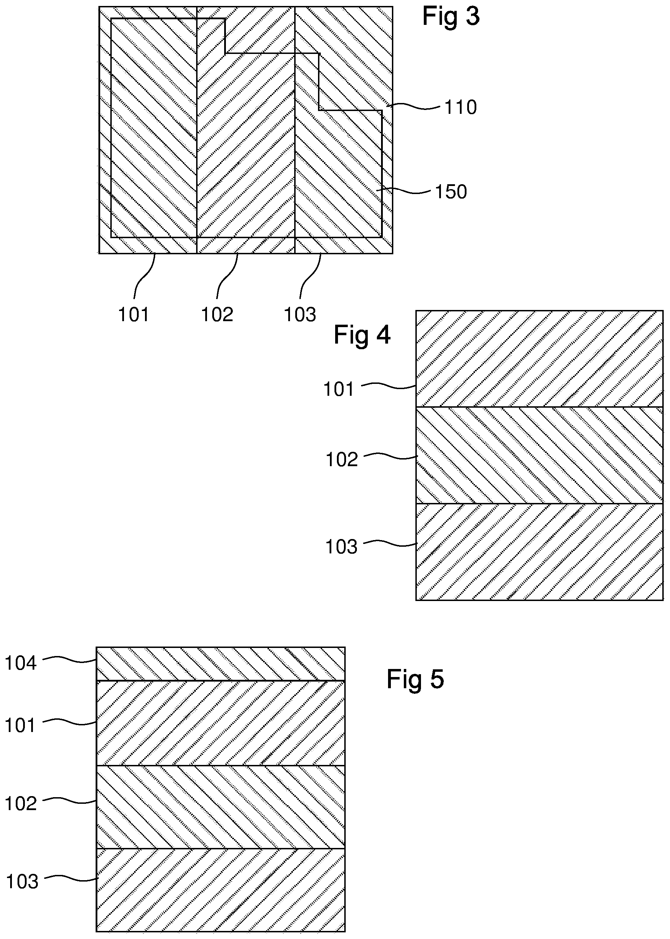

Referring to Figs 3-5 in the attached drawings, wood components 150 have for a long time been formed from intermediate products in terms of strips, which are formed by lamination of planks 101, 102, 103, 104 of wood. The planks are typically laminated such that year rings in the outer planks are substantially parallel to the surface, which provides a plain appearance.

Such planks 101, 102, 103, 104 of wood are traditionally formed from a log according to a pattern such as the one disclosed in Fig. 1 of US5816015. That is, the plank is sawn along its length direction along a plurality of planes which all extend along the length direction of the log and which are either parallel with, or perpendicular to, each other.

Elongate planks thus formed, having a substantially constant square or rectangular cross section are dried, formatted and then dry-glued together along one or more planes which are perpendicular to the cross section, as illustrated in Figs 4 and 5, typically creating an intermediate product 110 having cross sectional dimensions on the order of 50-100 mm by 50-100 mm and a length of 0.5 to 6.0 m.

However, using the traditional formatting of the planks, the control of the orientation of the year rings in the resulting intermediate product is limited, as is also the control of the resulting end product, the wood component. Moreover, only a few parts of each log cross section actually provide a year ring orientation that is acceptable for such components. Thus, with a stricter requirement on year ring orientation, yield decreases.

Moreover, in many countries, insulation properties, also with respect to the window frame, is becoming increasingly important. This is particularly the case since insulation properties of the glass inserts are becoming so good that window frames is appearing as the weak link.

There is also the issue of yield. That is, maximizing use of the raw material.

Hence, there is a need for an improved method of making laminated wood components, such as for door frames and window frames.

### Summary

It is a general object of the present disclosure to provide an improved method of making a laminated wood component for use in door frames and/or window frames. It is a specific object to provide components which are of even quality, with good dimensional stability, good strength, good insulation properties and with minimum waste of material.

It is also an object to provide an improved laminated wood component for use in making door frames and window frames, the component having good dimensional stability and insulation properties.

The invention is defined by the appended independent claims, with embodiment being set forth in the appended dependent claims, in the following description and in the drawings.

According to a first aspect, there is provided a laminated wood component for use as a door frame or window frame. The component presents a cross section and a longitudinal direction, perpendicular to the cross section, and a main fiber direction, which is substantially perpendicular to the cross section. The cross section is substantially constant along the longitudinal direction. The laminated wood product is formed of at least two adjacent wood lamellae. The wood component presents at least one longitudinally extending face, which is perpendicular to the cross section, and which is planed and/or profiled and the wood lamellae are glued together along a joint plane that presents an angle to the longitudinally extending face, which is greater than 0° and less than 90°, preferably 1 °-30° or 60°-89° . More preferably, the angle may be preferably 1 °-20° or 70°-89°.

The terms "planing" and "profiling" are well known in the wood working art.

The term "face" is understood as an outwardly exposed surface.

Such a laminated wood component can be formed with optimal orientation of wood ring orientation and with optimum use of the wood raw material: whether maximum strength or insulation properties are to be prioritized.

In the wood component, an intersection between the joint plane and one of the longitudinally extending faces may be spaced from both intersections between that longitudinally extending face and other ones of the longitudinally extending faces along at least 50 % of a length of the wood component, preferably along at least 75 % or at least 99 % of the length of the wood component.

Hence, each joint plane may be visible along a substantial portion of the wood component, and preferably on only two longitudinally extending faces (front and rear).

The joint plane may present an angle to the longitudinally extending face, which is greater than 5°, preferably greater than 10° or 15°.

The wood lamellae may be glued together along the joint plane by means of a glue that is suitable for wet gluing, such as a polyurethane based glue.

The wood component may be formed from two or more, but less than six, preferably less than five or less than four, wood lamellae, which are joined in the same manner along respective joint planes.

Adjacent joint planes may be non-parallel.

The wood component presents a pair of adjacent outwardly exposed longitudinally extending faces, positive surface normals of which crossing each other, preferably at an angle of more than 20°, more than 30°, more than 45°, more than 75° or about 90°.

Such a wood component may typically be provided by a profiling operation, such as a milling cutting operation.

A positive surface normal is defined as a surface normal which extends outwardly of the surface, away from the body delimited by the surface.

In the wood component, at least one of the longitudinally extending faces may comprise at least two portions, which are parallel and separated in a direction normal to the face. That is, a face of the wood component may comprise two or more "levels" or "steps".

At the joint plane, a bending radius of a year ring of one of the wood lamellae may be parallel +/- less than 10°, preferably less than +/- 5° or less than +/-1°, and oppositely directed to a bending radius of a year ring of the other one of the wood lamellae, taken at the same position, seen in a thickness direction of the wood component.

In particular, the joint plane may be formed by surfaces which were formed by the same cut of the log.

The component may be formed of at least 90 % wood lamellae which are not joined in an end-to-end manner to other wood lamellae. Preferably, none of the lamellae are joined in an end-to-end manner, as this is typically performed in a dry gluing operation whereas the lamellae are preferably, but not necessarily, glued together in a wet gluing operation.

At least one of the lamellae making up the component may be formed at a portion of the log presenting a density minimum. That is, the component may have been formed at a portion of the log selected such that a density minimum is achieved. The density minimum may be identified as a maximum radial width of early-wood type year rings.

This is based on the insight that the central part of the log displays wider year rings compared to the outermost part of the log. Within one annual ring there is the "early-wood" (i.e. the normally lighter-colored part) which has low density and the "late-wood" (the darker-colored part) which has high density. The proportion of late-wood normally gets higher the older the tree becomes. High density correlates strongly with high strength values and low insulation values. So, on average, in the central part of the log wood with low strength values and high insulation value is normally found. Moving radially outwardly towards the outside part of the log, the strength values get higher and the insulation value get lower.

The component may comprise a middle lamella sandwiched between a pair of outer lamellae, wherein the middle lamella is formed from a portion of a log that is closer to the pith than what the outer edge lamellae are.

With such a composition, the middle lamella may provide the best insulation properties whereas the outer lamellae provide strength.

The middle lamella may present a substantially trapezoidal cross section.

The joint plane may present an angle of 70°-89°, preferably 80°-89° to the cross section. Thus, the lamellae may be formed as tapering lamellae, i.e. lamellae that has base surfaces which taper along the longitudinal direction of the lamellae.

The longitudinally extending face may present a longitudinal edge and the joint plane may intersect at the longitudinally extending face along a line that is non-parallel with the longitudinal edge.

In the alternative, the joint plane may be perpendicular to the cross section. In this case, the lamellae may present a constant cross section, that is base surfaces which do not taper.

The wood component may further comprise at least one face lamella, which presents a rectangular cross section.

By adding a face lamella, it is possible to more precisely control the appearance of the component. For example, at least some portions of a window frame or a door frame that are to provide surfaces having positive surface normals that are parallel with a positive surface normal of the inner or outer wall surface of the wall in which the frame is arranged may be provided by forming of the face lamella.

The face lamella may be formed from a single piece of wood.

At least two exposed faces of the wood component may be formed in the face lamella, said at least two exposed faces being formed such that positive surface normals thereof cross each other, preferably at an angle of more than 20°, more than 30°, more than 45° or more than 80°.

A major surface of the face lamella may present an angle greater than 45° to a joint plane intersecting the major surface, preferably greater than 60° or greater than 70°.

As seen in cross section, year rings of the face lamella may extend at an angle of more than 45°, preferably more than 55°, to major surfaces of the face lamella.

The wood lamellae, from which the wood component is made may be selected from a group consisting of softwood, i.e. gymnosperm tree species, having a density of more than 400 kg/m³, and hardwood, i.e. angiosperm tree species, having a density of more than 400 kg/m³.

The wood component may present a length along its fiber direction, which may be at least 200 % of a length along a greatest length of its cross section, preferably 300 % or 500 %.

According to an embodiment, there is provided a frame for a window or door comprising a frame portion that is formed of a wood component as described above and that positioned to face perpendicular to surface of a wall in which the window or door frame is arranged.According to a second aspect, there is provided a method of forming the laminated wood component. The method comprises
a) providing a billet, formed of a plurality of elongate wood lamellae, wherein the lamella are formed along a principal fiber direction of a log, and each of the lamellae presents a substantially trapezoidal cross section, major base surfaces of each pair of adjacent lamellae face opposite directions,
b) cutting the billet along at least one plane that is perpendicular to the trapezoidal cross section, whereby an intermediate laminate wood product is formed; and
c) forming the laminated wood product by profile cutting along at least one plane that is perpendicular to the trapezoidal cross section, such that the laminated wood product will comprise parts of at least two adjacent lamellae.

In the method, the cutting may comprise cutting the billet along a least one first cutting plane that is substantially perpendicular to the base surfaces and cutting the billet along at least one second cutting plane which is substantially parallel to the base surfaces, both of said cutting planes extending substantially perpendicular to the trapezoidal cross section.

The intermediate wood product may be formed by a pair of first cutting planes, which are positioned such that the intermediate wood product will comprise parts of at least three lamellae, including a middle lamella which is sandwiched between two outer lamellae.

The intermediate wood product may be formed also by said second cutting plane, wherein the second cutting plane is positioned such that the middle lamella is formed at a portion of the trapezoidal cross section that is closer to a pith of the log than to a bark side of the log.

The intermediate wood product may be formed by a pair of first cutting planes, which are positioned such that the intermediate wood product will comprise parts of only two adjacent lamellae.

The second cutting plane may be positioned such that the intermediate wood product is formed at a portion of the log which is more than 20 % of a log radius away from a pith of the log and less than 80 % of the log radius away from the pith.

The method may further comprise joining at least two intermediate wood products in an end-to-end manner prior to said forming the laminated wood product.

The method may further comprise identifying a portion of the billet wherein a wood density is at a minimum as seen in a thickness direction of the billet, and aligning a cutting pattern for cutting the intermediate wood product based on said minimum.

Providing the billet comprises cutting a log along a principal fiber direction of the log, into a plurality of wood lamellae, such that the wood lamellae are formed as radial sections of the log, forming the wood lamellae to provide each wood lamella with a trapezoidal cross section, whereby the wood lamellae present a respective planar major base surface that is formed at a radially outer part of the log and a respective planar minor base surface that is formed at a radially inner part of the log, arranging the lamellae as at least one layer in which planar major base surfaces of immediately adjacent lamellae face opposite directions, whereby the major base surfaces of immediately adjacent wood lamellae taper in opposite directions.

With such method, base surfaces of each pair of adjacent lamellae would taper towards opposite directions parallel with the principal fiber direction.

The method may comprise wet gluing together the lamellae side surface to side surface. Such wet gluing may be made without the cut surface, i.e. the side surfaces, being subjected to any further surface processing other than cleaning and removal of free water from the cut surface.

The forming of the lamellae may comprise a first forming step, in which the major base surfaces are formed along the outermost part of the log, preferably along a direction which is substantially parallel with the outermost surface of the log.

Alternatively, the lamellae may be formed along the longitudinal direction of the log, basically using the pith area as a reference. In such case, base surfaces would present a constant width.

The method may further comprise laminating a face lamella, which presents a rectangular cross section, to a surface of the intermediate wood product that presents an angle of more than 45°, preferably more than 60° or more than 70°, to a joint plane along which a pair of trapezoidal lamellae are joined.

The method may further comprise forming an exposed face by cutting into said face lamella.

The method may further comprise arranging at least two face lamella pieces on said surface of the intermediate wood product, wherein a joint between end portions of said face lamella pieces is offset in a longitudinal direction of the component from a joint between said at least two intermediate wood products.

The method may further comprise arranging at least two face lamella pieces on said surface of the intermediate wood product, such that said adjacent end portions of face lamella pieces are spaced from each other. In the method, providing the billet may comprise wet gluing the wood lamellae to each other side surface to side surface, wherein said wet gluing comprises gluing at a moisture content of the wood lamellae of at least 25 % by weight of dry mass, preferably at least 30 % by weight of dry mass.

### Brief Description of the Drawings

Figs 1a-1h schematically illustrate a method of making an intermediate product in the form of a billet.
Fig 2a is a schematic side view of a system for producing wood lamellae
Fig. 2b is a schematic sectional view taken along line A-A of Fig. 2a.
Fig. 3 schematically illustrates a prior art method of forming an elongate wood component.
Fig. 4 schematically illustrates a prior art intermediate product from which a wood component may be formed.
Fig. 5 schematically illustrates another prior art intermediate product from which a wood component may be formed.
Fig. 6 schematically illustrates a method of forming an elongate wood component from a billet such as the one provided at Fig. 1h.
Fig. 7 schematically illustrates another method of forming an elongate wood component from a billet such as the one provided at Fig. 1h.
Fig. 8 schematically illustrates a component 250 according to the present disclosure.
Figs 9a-9e schematically illustrate components formed according to an alternative concept.
Fig 10 schematically illustrates a component according to the concept of Figs 9a-9e.

### Detailed Description

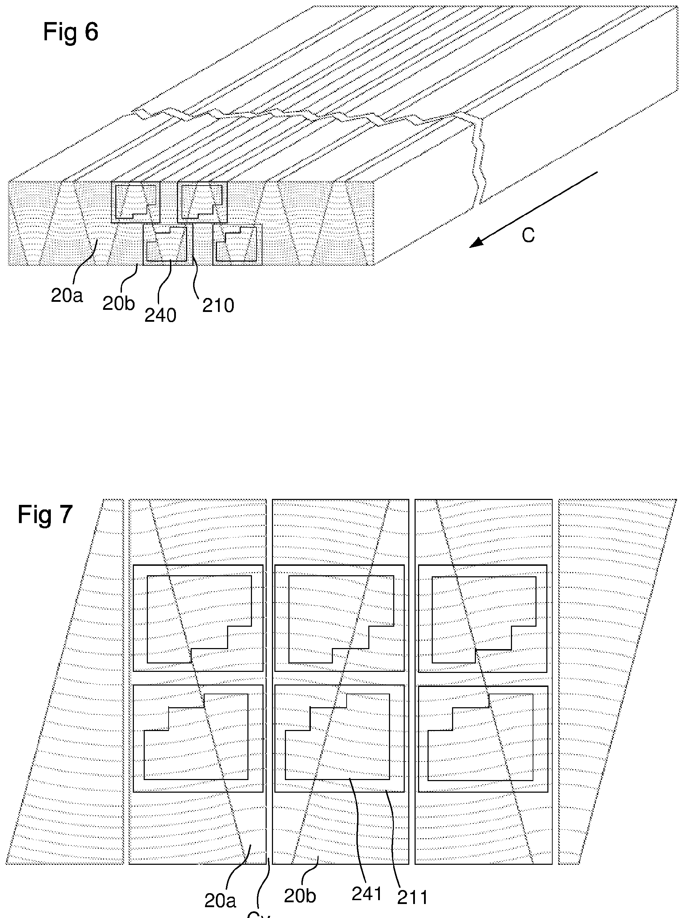

The description will initially be directed to a new method of making a wood billet. This wood billet forms the starting material for making the laminated wood product which will be described with reference to Figs 6 and 7.

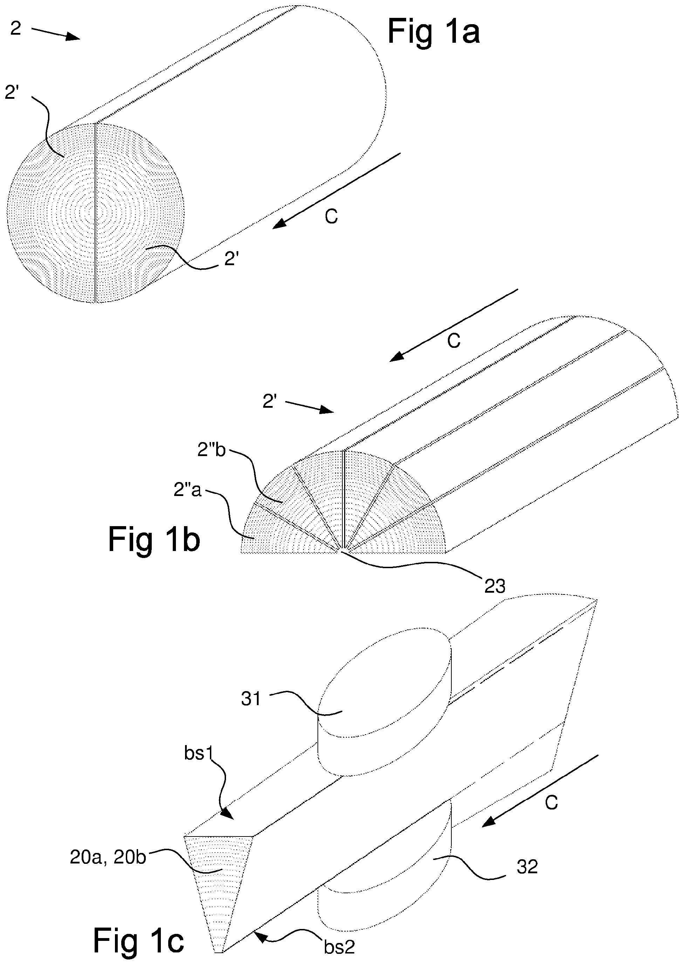

Fig. 1a schematically illustrates a log 2, which has been cut longitudinally into two halves 2'. The log 2 may have been debarked prior to this cutting. The cutting may be performed by any type of cutting device, such as, but not limited to, a saw, e.g. a circular saw or a band saw.

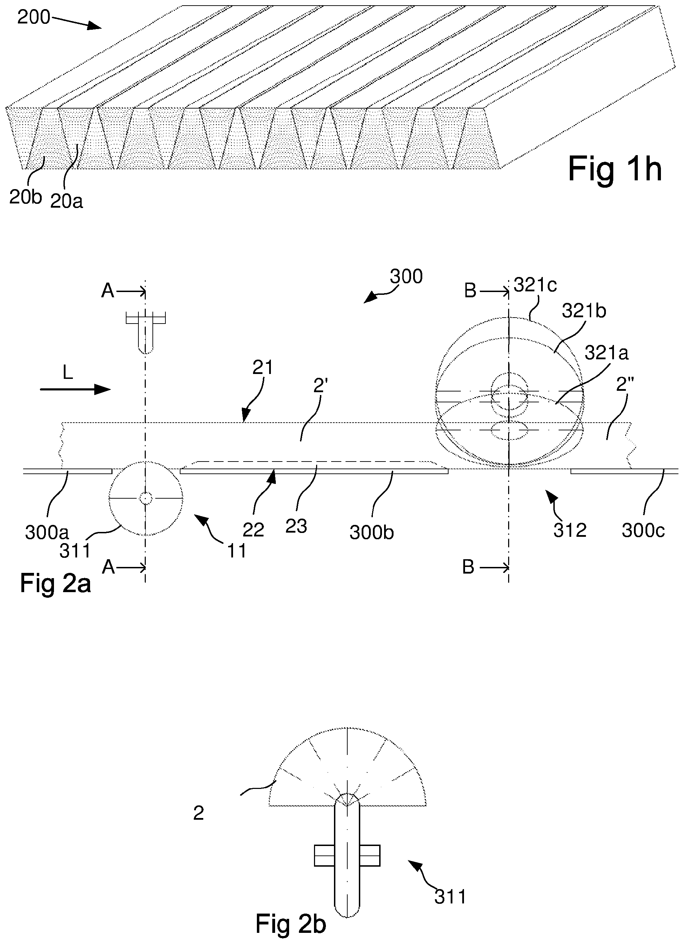

Fig. 1b schematically illustrates a log half 2' after it has provided with a longitudinally extending groove 23 along its pith and cut longitudinally into six radial sections 2"a, 2"b, as will be further described with reference to Figs 2a-2b.

Fig. 1c schematically illustrates processing of one of the radial sections 2"a, 2"b into a lamella 20a, 20b. The lamella 20a, 20b is subjected to forming of base surfaces bs1, bs2, to form a lamella 20a, 20b, which will present a trapezoidal cross section.

The base surfaces bs1, bs2 thus formed comprise a major base surface bs1, which is formed by tool 31 closest to the bark of the log and along the bark side. The base surfaces further comprise a minor base surface bs2, which is formed close to the pith and parallel with the major base surface bs1 by tool 32.

The tools 31, 32 may be any type of tool capable of forming a planar surface, including but not limited to milling cutters, circular saw blades or band saw blades.

The first tool 31, which forms the major base surface bs1, is arranged to use the bark side as reference, such that the major base side bs1 is formed along a direction parallel with the bark side.

The second tool 32, which forms the minor base surface bs2, is arranged to use the major base surface and/or the bark side as a reference, such that the minor base surface bs2 is formed along a direction parallel with the major surface and/or the bark side.

The cross section of the lamellae 20a, 20b is trapezoidal having a constant height. With the major base surface bs1 being formed substantially parallel with the bark, and with the log presenting a frusto-conical shape, it is recognized that the major base surface bs1 will taper along the central direction of the log C. That is, the log will taper in a direction towards the top of the tree from which it was formed. This direction is also parallel with the principal fiber direction of the log and of the wood lamellae.

Moreover, the minor base surface bs2 will also taper along the central direction C of the log.

The fact that the radius of the log would also diminish towards the top of the tree from which it was formed, implies that while the amount of material removed at the bark side, by tool 31, in the forming of the major base sides bs1 will be substantially constant along the length of the lamella 20a, 20b, as seen in the radial direction.

However, the amount of material removed at the pith side, by tool 32, will diminish towards as seen in the direction towards the top of the tree from which the lamella 20a, 20b was formed.

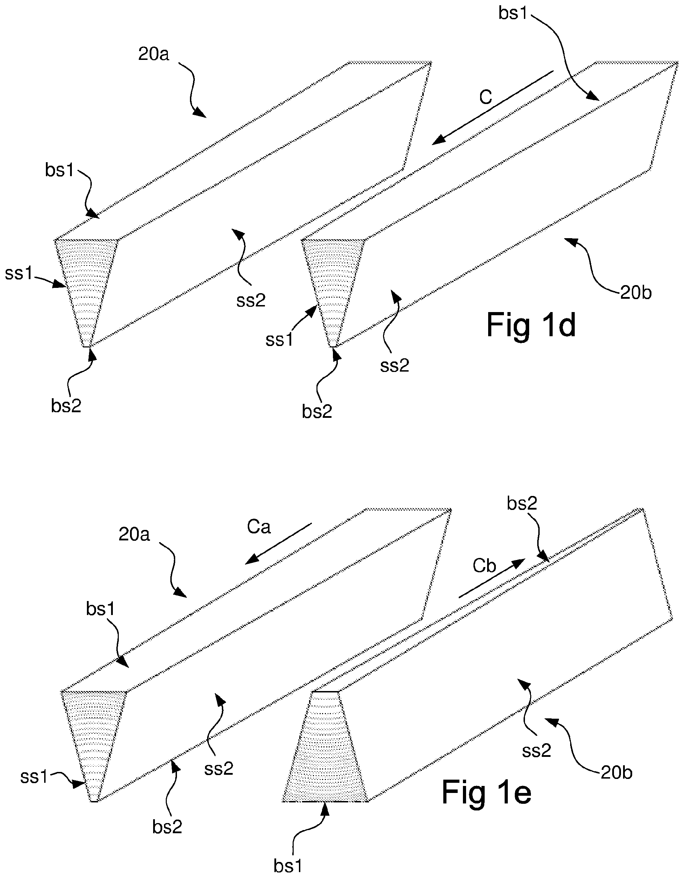

Referring to Fig. 1d, after the lamellae 20a, 20b have been formed, each lamella will have a major and a minor base surface bs1, bs2 and a pair of side surfaces ss1, ss2, which will be identical.

Referring to Fig. 1e, every second lamella 20b will now be turned or flipped about 180° about its longitudinal axis and about 180° about an axis perpendicular to the longitudinal axis and perpendicular to the major base surface bs1, such that the lamellae will become positioned as illustrated in Fig. 1e. That is, the directions of taper Ca and Cb will extend in opposite directions.

At this point, the base surfaces of every pair of adjacent wood lamellae 20a, 20b will taper towards substantially opposite directions. Moreover, major base surfaces bs1 of every pair of adjacent wood lamellae will face substantially opposite directions, i.e. one upwards in Fig. 1e and the other one downwards in Fig. 1e.

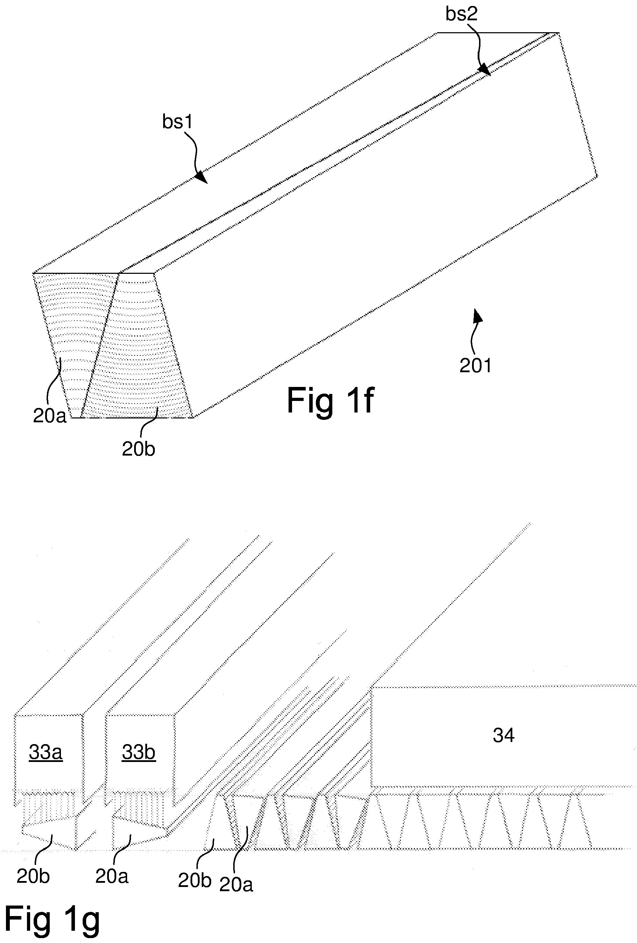

At this point, the wood may still be "wet", that is, its moisture content may be more than 25 % by dry mass, preferably more than 30 %. Hence, the wood has not been subjected to any accelerated or intentional drying, such as kiln drying. When wet gluing, it is recommended to reduce the amount of free water on the wood surface to a minimum. Hence, a brief surface drying step, basically having no effect except for on the very surface, may be performed, e.g. by means of a fan.Fig. 1f schematically illustrates the two lamellae 20a, 20b when arranged adjacent each other, side surface ss1 to side surface ss2 and with base surfaces bs1, bs2 of the pair of thus adjacent lamellae 20a, 20b tapering in opposite directions.

Referring to Fig. 1g, there is illustrated a pair of glue applicators 33a, 33b, which apply glue to side surfaces of lamellae 20a, 20b, respectively. A single, or even more, glue applicators may be used.

The lamellae are then arranged as illustrated in Fig. 1g, i.e. with the base surfaces bs1, bs2 of every pair of adjacent wood lamellae 20a, 20b tapering towards substantially opposite directions and major base surfaces bs1 of every pair of adjacent wood lamellae facing substantially opposite directions.

The glue used is a glue adapted for wet gluing wood, such as a water activated glue. One example of such glue is a polyurethane (PU) based glue.

The lamellae 20a, 20b will be subjected to a pressing tool 34 pressing the lamellae 20a, 20b together in directions perpendicular to the base surfaces 20a, 20b and/or parallel with base surfaces 20a, 20b and perpendicular to longitudinal axes C.

Depending on the design of the pressing equipment, the billet 200 that is formed may be of a predetermined length or it may be continuous in a direction perpendicular to the lamellae fiber direction and parallel with the base surfaces bs1, bs2, that is, lamellae are added to one end of the billet and fed into the press while at the output side of the press, pieces of the billet 200 are sawn off at predetermined intervals.

As illustrated in Fig. 1h, after the gluing process, an intermediate wood product, here referred to as a "billet" 200 is provided, made up of wood lamellae 20a, 20b glued together first side surface ss1 to first side surface ss1 and second side surface ss2 to second side surface ss2.

In the illustrated example, the billet 200 consists of a single layer of lamellae 20a, 20b, which are arranged side surface to side surface and with major base surfaces bs1 of immediately adjacent lamellae facing opposite directions and with base surfaces bs1, bs2 of immediately adjacent lamellae tapering in width in opposite directions.

It is noted that an alternative billet may be produced from logs which are sawn according to Figs 1a-1b and wherein the lamellae are formed with the pith side as a reference. Such lamellae may have constant cross section, such that base surfaces will be rectangular rather than tapering in width.

Fig. 2a is a schematic side view of a device 300 for producing wood lamellae 20a, 20b from a half-log 2'. The device comprises a groove cutter 311 and a set 312 of radial cutters 321a, 321b, 321c, 321d and 321e. Moreover, the device 300 may comprise a conveyor arrangement 300a, 300b, 300c for causing relative movement between the log and the cutters 311, 312. Typically, the log may be moved relative to stationary cutters 311, 312. However, it is also possible to provide cutters 311, 312, which are capable of moving along the length of the half-log 2'.

The half log 2' has typically been longitudinally cut in half prior to being introduced into the device 300. That is, the log has been cut longitudinally along a plane containing a central axis C of the log. The log may have been pre-cut into an appropriate length, such as 1-10 m, preferably 1-5 m, 1-3 m or 1-2 m. Moreover, the log may have been wholly or partially debarked. Hence, the log can be said to present a planar surface 22 and a convex surface 21. For practical reasons, the log may be conveyed with its planar surface facing downwardly and oriented horizontally.

Fig. 2b is a cross sectional view taken along line A-A in Fig. 2a. In Fig. 2b, it is illustrated how the groove cutter 311 provides a longitudinal groove at the central portion of the log, i.e. at the pith area.

The groove cutter 311 may be formed as a circular, rotatable cutter having a cutting edge with a cross section that corresponds to a desired cross section of the groove 23.

The groove 23 formed by the groove cutter 311 may presents a substantially concave surface, which may be substantially half circular, or which may be polygonal.

The groove cutter 311 may extend upwardly from a support on which the log is to be supported with its planar surface 22 facing downwardly.

Figs 3-5 illustrate a prior art method, as was described in the background section.

Referring to Fig. 6, there is disclosed a first concept for providing laminated wood components based on the wood billet 200.

The components provided according to Fig. 6 are "3-ply" components, i.e. each component is formed of three different wood lamellae.

In Fig. 6, there is indicated a respective intermediate product profile 210 and a respective component profile 240. In the concept illustrated in Fig. 6, the profiles have been aligned to the billet 200 in such manner as to prioritize use of the low density wood from the center of the log while also making use of the higher strength wood from the bark area of the log. That is, 3-ply components are provided wherein a middle ply is taken from a portion of the log which is closer to the pith than the edge plys.

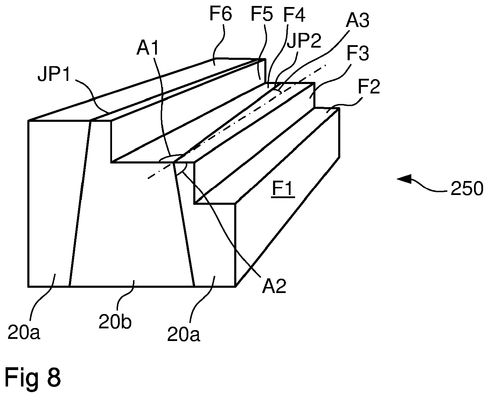

When forming the laminated wood component 250 (Fig. 8), the billet 200 will initially be processed into a number of intermediate products 210, each of which may have a substantially square or rectangular cross section.

To produce the intermediate product 210 profiles, the billet 200 may initially be cut once or more along a plane that is parallel to the base surfaces bs1, bs2, depending on desired thickness of the intermediate products. The resulting thinner slabs, or partial billets, may then be cut along planes that are parallel with a length direction of the lamellae and perpendicular to the base surfaces bs1, bs2, whereby a plurality of intermediate products are formed.

These intermediate products 210 may then be processed to components, either as they are, or subsequent to an end-to-end jointing step, in which a pair of intermediate products are joined end-to-end by e.g. finger jointing, whereby a longer intermediate product is provided.

Prior to forming the component profile 240 from the intermediate product 210, the intermediate product 210 profile may be aligned to fit with the component profile 240. Such alignment may include a step of rotating the intermediate product about its longitudinal axis. The alignment may also comprise a step of linearly displacing the intermediate product relative to the processing equipment along one or both axes of the intermediate product's cross sectional plane.

In the step where the component profile 240 is formed, an intermediate product, regardless of length, may be processed by milling and/or planing, such that an arbitrary profile is achieved.

In Fig. 7, there is indicated a respective intermediate product profile 211 and a respective component profile 241. In the concept illustrated in Fig. 7, the profiles have been aligned to the billet 200 in such manner as to entirely prioritize use of the low density wood at the central to middle part of the log. That is, 2-ply components are created, wherein the entire component is formed from wood taken from a part of the log that is inside the innermost 80 % of a log radius, preferably inside the innermost 75 % of the log radius, and that is outside the innermost 20 % of the log radius, preferably outside the innermost 25 % of the log radius.

In the concept illustrated in Fig. 7, the intermediate product 211 may be formed by initially cutting the billet 200 along a plane Cv that is parallel with the longitudinal direction of the lamellae and perpendicular to the base surfaces bs1, bs2. Each plank thus formed may then be cut along one or more planes that are parallel with the base surfaces bs1 bs2 to form the intermediate products 211.

The intermediate products 211 may then be processed to components either as they are, or subsequent to an end-to-end jointing step, in which a pair of intermediate products are joined end-to-end by e.g. finger jointing, whereby a longer intermediate product is provided.

Prior to forming the component profile 241 from the intermediate product 211, the component profile 241 may be aligned to fit with the intermediate product profile 211. Such alignment may include a step of rotating the intermediate product about its longitudinal axis. The alignment may also comprise a step of linearly displacing the intermediate product relative to the processing equipment along one or both axes of the intermediate product's cross sectional plane.

In the step where the component profile 241 is formed, an intermediate product, regardless of length, may be processed by milling and/or planing, such that an arbitrary profile is achieved.

In particular, component profiles may be formed presenting a polygonal cross section with three, four or more longitudinally extending faces.

A component profile comprises one or more pairs of longitudinally extending faces which present positive surface normals, which cross each other.

Fig. 8 schematically illustrates a 3-ply laminated wood component 250, which is formed as a 3-ply laminated wood component comprising a middle lamella 20b and a pair of outer lamellae 20a. The outer lamellae 20a are joined to the middle lamella 20b at respective joint planes JP1, JP2.

At least the middle lamella 20b may present a substantially trapezoidal cross section.

The joint planes JP1, JP2 provide an angle A1 relative to the cross section, which angle A1 is in the range 70°-89° or 80°-89°.

The joint planes JP1, JP2 provide an angle A2 to at least one edge of the cross section profile, that is greater than 0 and less than 90, preferably 1°-15° or 75°-89°.

Moreover, the joint planes JP1, JP2 provide lines of intersection relative to respective faces F6, F4 of the component 250. Such lines provide an angle A3 relative to longitudinal edges of the faces F6, F4 which is in the range 1°-20° or 5°-15°.

The laminated component 250 presents profiled faces F1, F2, F3, F4, F5, F6, of which faces F2 and F3 and faces F4 and F5 present surface normals which intersect each other.

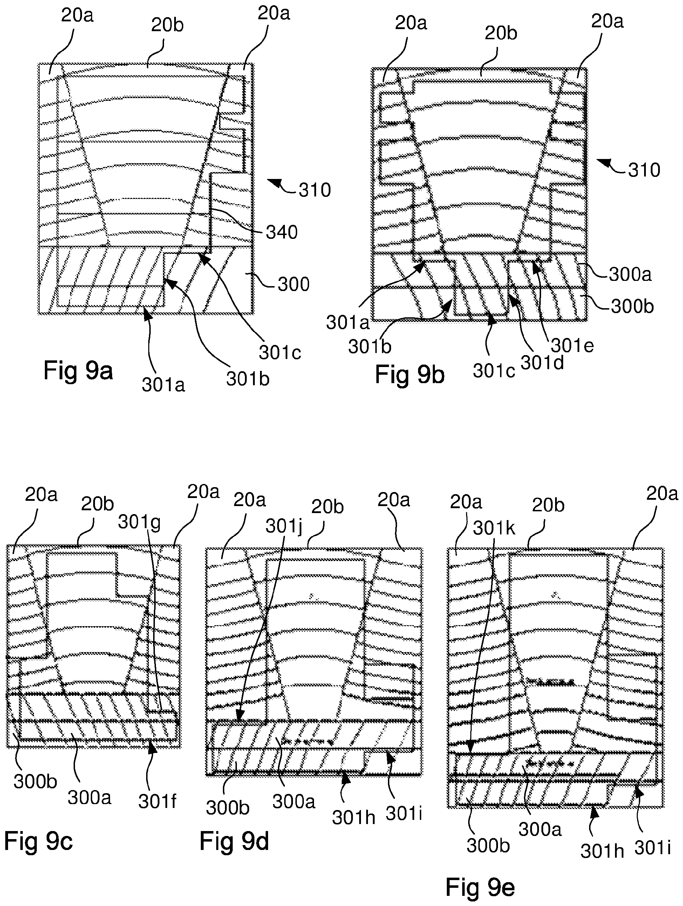

Figs 9a-9e schematically illustrate embodiments of a wood component, in which an additional face lamella has been provided, and wherein those parts of the wood component that are to be exposed have been formed in this face lamella.

Referring to Fig. 9a, there is illustrated an intermediate component 310 with a final component profile being indicated by the line 340. The intermediate component is made up of the trapezoidal lamellae 20a, 20b as described above, with the addition of the face lamella 300.

This face lamella 300 may be a lamella which is cut in the traditional manner, i.e. according to a pattern wherein the cross section of the log to the greatest extent is divided by mutually orthogonal cuts.

The face lamella 300 may thus be formed from a single piece of wood. Alternatively, the face lamella 300 may be formed from a laminated wood, based on planar wood pieces that are laminated principal surface to principal surface.

Surfaces 301a, 301b, 301c of the finished component 340 that are to be exposed, such as those surfaces of a window or door frame that are visible when the window or door frame is mounted in a wall, may be formed in the face lamella 300, while all, or most of, the non-exposed surfaces are formed in the part of the component that is made up from the trapezoidal lamellae 20a, 20b.

In the illustrated embodiment, these exposed surfaces 301a, 301 b, 301c may comprise pairs of surfaces whose positive surface normals extend substantially orthogonally relative each other.

Fig. 9b illustrates another example of a component that presents exposed surfaces 301a, 301b, 301c, 301d, 301e that are formed in a face lamella. In this example, the face lamella is made up of a pair of laminated planar pieces of wood 300a, 300b.

Fig. 9c illustrates an example where there is a pair of surfaces 301f, 301g, which face opposite directions, away from each other, and which are formed in the face lamella, which may be formed from a single piece of wood, or from a pair of laminated wood pieces 300a, 300b, as illustrated.

Fig. 9d illustrates an example, where there are a pair of exposed forwardly facing surfaces 301h, 301i formed in the face lamella 300a, 300b and also one oppositely, i.e. rearwardly, facing surface 301j. The forwardly facing surfaces 301h, 301i are formed in the same piece of wood 300b.

In the example illustrated in Fig. 9e, there are also a pair of forwardly facing surfaces 301h, 301i which may be formed in the same piece of wood 300b. There is also one rearwardly facing surface 301k, which is formed at the interface between the trapezoidal lamella 20a and the face lamella 300a.

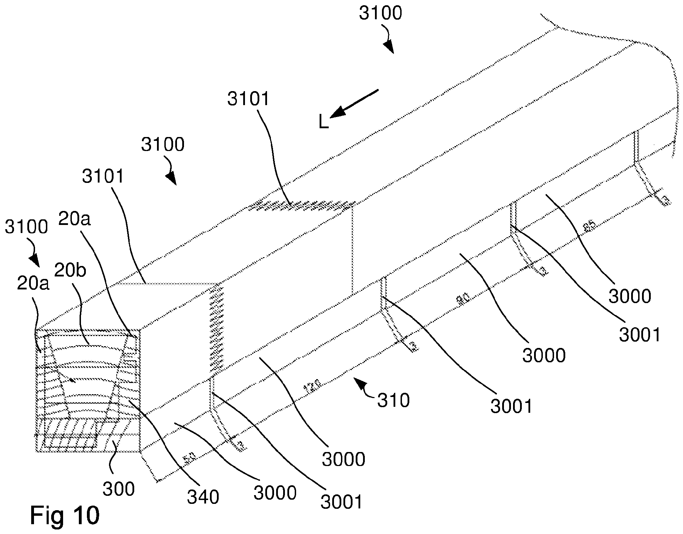

Fig. 10 schematically illustrates an intermediate component 310, with the component profile marked as 340.The component comprises face lamellae 300 at a part thereof from which exposed surfaces are to be formed.

The component 310 may be formed by a plurality of component parts 3100 which are joined together short side to short side, for example by finger jointing.

It is understood that to provide a long intermediate component 310, the face lamellae 300 may also need to be provided by a plurality of face lamella pieces 3000. To this end, it is possible to arrange the face lamella pieces such that joints between adjacent pieces 3000 do not overlap joints between the component parts 3100. Hence, each joint 3001 between lamella pieces are offset in the longitudinal direction L relative to joints 3101 between the component parts 3100.

As illustrated in Fig. 10, end portions of the face lamella pieces 3000 may be spaced apart from each other. That is, the face lamella pieces may not be connected to each other. The space between the end portions may be on the order of 0.5-10 mm, preferably 1-5 mm.

## Claims

1. A laminated wood component (250) for use e.g. as a door frame or window frame,
wherein the wood component presents a pair of adjacent outwardly exposed longitudinally extending faces (F2, F3; F4, F5), having a respective positive surface normal extending outwardly from the surface, away from the body delimited by the surface, wherein the respective surface normal cross, preferably at an angle of more than 20°, more than 30°, more than 45°, more than 75° or about 90°, the component presenting:
a cross section and a longitudinal direction (C), perpendicular to the cross section, and
a main fiber direction, which is substantially perpendicular to the cross section,
wherein the cross section is substantially constant along the longitudinal direction,
wherein the laminated wood product is formed of at least two adjacent wood lamellae (20a, 20b), which are joined along a joint plane (JP1, JP2),
wherein the wood component presents at least two longitudinally extending faces (F1, F2, F3, F4, F5, F6), which are perpendicular to the cross section, and which are planed and/or profiled, wherein
the joint plane (JP1, JP2) presents:
a first angle (A1) of 70°-89°, preferably 80°-89° to the cross section,
**characterized in that**
the joint plane presents:
a second angle (A2) to a first longitudinally extending face (F2, F4, F6), which is perpendicular to the cross section, said second angle (A2) being greater than 0° and less than 90°, preferably 1°-30°, 60°-89° or 45-89°, and
a third angle (A3) relative to a second longitudinally extending face (F1, F3, F5) which is perpendicular to the cross section and to the first longitudinally extending face (F2, F4, F6), said third angle being in the range 1°-20° or 5°-15°.

2. The wood component as claimed in claim 1, wherein an intersection between the joint plane (JP1, JP2) and one of the longitudinally extending faces is spaced from both intersections between that longitudinally extending face and other ones of the longitudinally extending faces along at least 50 % of a length of the wood component, preferably along at least 75 % or at least 99 % of the length of the wood component.

3. The wood component as claimed in any one of the preceding claims, wherein the wood lamellae (20a, 20b) are glued together along the joint plane (JP1, JP2) by means of a glue that is suitable for wet gluing, such as a polyurethane based glue.

4. The wood component as claimed in any one of the preceding claims, wherein at least one of the longitudinally extending faces comprises at least two portions, which are parallel and separated in a direction normal to the face.

5. The wood component as claimed in any one of the preceding claims, wherein, at the joint plane (JP1, JP2), a bending radius of a year ring of one of the wood lamellae is parallel +/- less than 10°, preferably less than +/- 5° or less than +/-1°, and oppositely directed to a bending radius of a year ring of the other one of the wood lamellae, taken at the same position along the joint plane (JP1, JP2).

6. The wood component as claimed in any one of the preceding claims, wherein the component comprises a middle lamella (20b) sandwiched between a pair of outer lamellae (20a), wherein the middle lamella is formed from a portion of a log that is closer to the pith than outer edge lamellae.

7. The wood component as claimed in any one of the preceding claims, wherein the wood lamellae (20a, 20b) are glued together along a joint plane (JP1, JP2) that is perpendicular to the cross section.

8. The wood component as claimed in any one of the preceding claims, further comprising at least one face lamella, which presents a rectangular cross section.

9. The wood component as claimed in claim 8, wherein the face lamella is formed from a single piece of wood.

10. The wood component as claimed in claim 8 or 9, wherein at least two exposed faces of the wood component are formed in the face lamella, said at least two exposed faces being formed such that positive surface normals thereof cross each other, preferably at an angle of more than 20°, more than 30°, more than 45° or more than 80°.

11. The wood component as claimed in any one of claims 8-10,
wherein a major surface of the face lamella presents an angle greater than 45° to a joint plane intersecting the major surface, preferably greater than 60° or greater than 70°.

12. The wood component as claimed in any one of claims 8-11, wherein, as seen in cross section, year rings of the face lamella extend at an angle of more than 45°, preferably more than 55°, to major surfaces of the face lamella.

13. The wood component as claimed in any one of the preceding claims, wherein the wood lamellae are selected from a group consisting of
softwood, i.e. gymnosperm tree species, having a density of more than 400 kg/m³, and
hardwood, i.e. angiosperm tree species, having a density of more than 400 kg/m³.

14. The wood component as claimed in any one of the preceding claims, wherein the wood component presents a length along its fiber direction, which is at least 200 % of a length along a greatest length of its cross section, preferably 300 % or 500 %.

15. A frame for a window or door comprising a frame portion that is formed of a wood component as claimed in any one of the preceding claims and that positioned to face perpendicular to surface of a wall in which the window or door frame is arranged.

16. A method of forming a laminated wood component as claimed in any of claims 1-15, comprising:
a) providing a billet, formed of a plurality of elongate wood lamellae, wherein
the lamella are formed along a principal fiber direction of a log,
each of the lamellae presents a substantially trapezoidal cross section, and
wood lamellae present a respective planar major base surface that is formed at a radially outer part of the log and a respective planar minor base surface that is formed at a radially inner part of the log, arranging the lamellae as at least one layer in which planar major base surfaces of immediately adjacent lamellae face opposite directions,
b) cutting the billet along at least one plane that is perpendicular to the trapezoidal cross section, whereby an intermediate laminate wood product is formed, and
c) forming the laminated wood component by profile cutting or planing along at least one plane that is perpendicular to the trapezoidal cross section, such that the laminated wood component will comprise parts of at least two adjacent lamellae,
wherein the wood component presents a pair of adjacent outwardly exposed longitudinally extending faces (F2, F3; F4, F5), having a respective positive surface normal extending outwardly from the surface, away from the body delimited by the surface, wherein the respective positive surface normals are crossing each other, preferably at an angle of more than 20°, more than 30°, more than 45°, more than 75° or about 90°.

17. The method as claimed in claim 16, wherein the cutting the billet comprises cutting the billet along a least one first cutting plane that is substantially perpendicular to the base surfaces and cutting the billet along at least one second cutting plane which is substantially parallel to the base surfaces, both of said cutting planes extending substantially perpendicular to the trapezoidal cross section.

18. The method as claimed in claim 16 or 17, wherein the intermediate wood product is formed by a pair of first cutting planes, which are positioned such that the intermediate wood product will comprise parts of at least three lamellae, including a middle lamella which is sandwiched between two outer lamellae.

19. The method as claimed in claim 18, wherein the intermediate wood product is formed also by said second cutting plane, wherein the second cutting plane is positioned such that the middle lamella is formed at a portion of the trapezoidal cross section that is closer to a pith of the log than to a bark side of the log.

20. The method as claimed in claim 16 or 17, wherein the intermediate wood product is formed by a pair of first cutting planes, which are positioned such that the intermediate wood product will comprise parts of only two adjacent lamellae.

21. The method as claimed in claim 19 or 20, wherein the second cutting plane is positioned such that the intermediate wood product is formed at a portion of the log which is more than 20 % of a log radius away from a pith of the log and less than 80 % of the log radius away from the pith.

22. The method as claimed in any one of claims 16-21, further comprising joining at least two intermediate wood products in an end-to-end manner prior to said forming the laminated wood product.

23. The method as claimed in any one of claims 16-22, further comprising identifying a portion of the billet wherein a wood density is at a minimum as seen in a thickness direction of the billet, and aligning a cutting pattern for cutting the intermediate wood product based on said minimum.

24. The method as claimed in any one of claims 16-23, further comprising laminating a face lamella (300), which presents a rectangular cross section, to a surface of the intermediate wood product that presents an angle of more than 45°, preferably more than 60° or more than 70°, to a joint plane along which a pair of trapezoidal lamellae are joined.

25. The method as claimed in claim 24, further comprising forming an exposed face by cutting into said face lamella.

26. The method as claimed in claim 24 or 25 in conjunction with claim 19, further comprising arranging at least two face lamella pieces (3000) on said surface of the intermediate wood product, wherein a joint between end portions of said face lamella pieces (3000) is offset in a longitudinal direction (L) of the component from a joint between said at least two intermediate wood products.

27. The method as claimed in any one of claims 24-26, further comprising arranging at least two face lamella pieces (3000) on said surface of the intermediate wood product, such that said adjacent end portions of face lamella pieces (3000) are spaced from each other.

28. The method as claimed in any one of claims 16-27, wherein providing the billet comprises wet gluing the wood lamellae to each other side surface to side surface, wherein said wet gluing comprises gluing at a moisture content of the wood lamellae of at least 25 % by weight of dry mass, preferably at least 30 % by weight of dry mass.

## Patentansprüche

1. Schichtholzkomponente (250) zur Verwendung z. B. als Türrahmen oder Fensterrahmen,
wobei die Holzkomponente ein Paar von benachbarten, nach außen exponierten, sich längs erstreckenden Flächen (F2, F3; F4, F5) mit einer jeweiligen positiven Flächennormale, die sich von der Fläche nach außen, weg von dem durch die Fläche begrenzten Körper, erstreckt, aufweist, wobei sich die jeweiligen Flächennormalen, vorzugsweise in einem Winkel von mehr als 20°, mehr als 30°, mehr als 45°, mehr als 75° oder etwa 90°, kreuzen, wobei die Komponente Folgendes aufweist:
einen Querschnitt und eine Längsrichtung (C), die senkrecht zu dem Querschnitt verläuft, und
eine Hauptfaserrichtung, die im Wesentlichen senkrecht zu dem Querschnitt verläuft,
wobei der Querschnitt entlang der Längsrichtung im Wesentlichen konstant ist,
wobei das Schichtholzprodukt aus mindestens zwei benachbarten Holzlamellen (20a, 20b) gebildet ist, die entlang einer Verbindungsebene (JP1, JP2) verbunden sind,
wobei die Holzkomponente mindestens zwei sich längs erstreckende Flächen (F1, F2, F3, F4, F5, F6) aufweist, die senkrecht zu dem Querschnitt sind, und die gehobelt und/oder profiliert sind, wobei
die Verbindungsebene (JP1, JP2) Folgendes aufweist:
einen ersten Winkel (A1) von 70°-89°, vorzugsweise 80°-89°, gegenüber dem Querschnitt, **dadurch gekennzeichnet, dass** der Verbindungswinkel Folgendes aufweist:
einen zweiten Winkel (A2) gegenüber einer ersten sich längs erstreckenden Fläche (F2, F4, F6), die senkrecht zu dem Querschnitt ist, wobei der zweite Winkel (A2) mehr als 0° und weniger als 90°, vorzugsweise 1°-30°, 60°-89° oder 45°-89° beträgt, und
einen dritten Winkel (A3) in Bezug auf eine zweite sich längs erstreckende Fläche (F1, F3, F5), die senkrecht zu dem Querschnitt und zu der ersten sich längs erstreckenden Fläche (F2, F4, F6) ist, wobei der dritte Winkel im Bereich von 1°-20° oder 5°-15° liegt.

2. Holzkomponente nach Anspruch 1, wobei ein Kreuzungspunkt zwischen der Verbindungsebene (JP1, JP2) und einer der sich längs erstreckenden Flächen von beiden Kreuzungspunkten zwischen dieser sich längs erstreckenden Fläche und anderen der sich längs erstreckenden Flächen entlang mindestens 50 % einer Länge der Holzkomponente, vorzugsweise entlang mindestens 75 % oder mindestens 99 % der Länge der Holzkomponente, beabstandet ist.

3. Holzkomponente nach einem der vorhergehenden Ansprüche, wobei die Holzlamellen (20a, 20b) entlang der Verbindungsebene (JP1, JP2) mittels eines zur Nassverleimung geeigneten Leims, beispielsweise ein Leim auf Polyurethanbasis, miteinander verleimt sind.

4. Holzkomponente nach einem der vorhergehenden Ansprüche, wobei mindestens eine der sich längs erstreckenden Flächen mindestens zwei Abschnitte umfasst, die parallel und in einer Richtung normal zu der Fläche voneinander getrennt sind.

5. Holzkomponente nach einem der vorhergehenden Ansprüche, wobei, an der Verbindungsebene (JP1, JP2), ein Biegeradius eines Jahresrings von einer der Holzlamellen parallel, +/- weniger als 10°, vorzugsweise weniger als +/-5° oder weniger als +/-1°, und entgegengesetzt zu einem Biegeradius eines Jahresrings der anderen der Holzlamellen, an der gleichen Position entlang der Verbindungsebene (JP1, JP2), ist.

6. Holzkomponente nach einem der vorhergehenden Ansprüche, wobei die Komponente eine mittlere Lamelle (20b) umfasst, die zwischen einem Paar von äußeren Lamellen (20a) angeordnet ist, wobei die mittlere Lamelle aus einem Abschnitt eines Stamms gebildet ist, der näher an dem Mark liegt als die Lamellen am äußeren Rand.

7. Holzkomponente nach einem der vorhergehenden Ansprüche, wobei die Holzlamellen (20a, 20b) entlang einer Verbindungsebene (JP1, JP2), die senkrecht zu dem Querschnitt verläuft, miteinander verleimt sind.

8. Holzkomponente nach einem der vorhergehenden Ansprüche, die ferner mindestens eine Stirnlamelle umfasst, die einen rechteckigen Querschnitt aufweist.

9. Holzkomponente nach Anspruch 8, wobei die Stirnlamelle aus einem einzigen Holzstück gebildet ist.

10. Holzkomponente nach Anspruch 8 oder 9, wobei mindestens zwei exponierte Flächen der Holzkomponente in der Stirnlamelle ausgebildet sind, wobei die mindestens zwei exponierten Flächen derart ausgebildet sind, dass sich positive Flächennormalen davon, vorzugsweise in einem Winkel von mehr als 20°, mehr als 30°, mehr als 45° oder mehr als 80°, kreuzen.

11. Holzkomponente nach einem der Ansprüche 8-10, wobei eine Hauptfläche der Stirnlamelle einen Winkel von mehr als 45°, vorzugsweise mehr als 60° oder mehr als 70°, gegenüber einer die Hauptfläche kreuzenden Verbindungsebene aufweist.

12. Holzkomponente nach einem der Ansprüche 8-11, wobei sich, im Querschnitt betrachtet, die Jahresringe der Stirnlamelle in einem Winkel von mehr als 45°, vorzugsweise mehr als 55°, zu den Hauptflächen der Stirnlamelle erstrecken.

13. Holzkomponente nach einem der vorhergehenden Ansprüche, wobei die Holzlamellen ausgewählt sind aus einer Gruppe bestehend aus
Weichholz, d. h. Gymnospermenhölzer, mit einer Dichte von mehr als 400 kg/m³, und
Hartholz, d. h. Angiospermenhölzer, mit einer Dichte von mehr als 400 kg/m³.

14. Holzkomponente nach einem der vorhergehenden Ansprüche, wobei die Holzkomponente entlang ihrer Faserrichtung eine Länge aufweist, die mindestens 200 % einer Länge entlang einer größten Länge ihres Querschnitts, vorzugsweise 300 % oder 500 %, beträgt.

15. Rahmen für ein Fenster oder eine Tür, der einen Rahmenabschnitt umfasst, der aus einer Holzkomponente nach einem der vorhergehenden Ansprüche gebildet ist, und der so positioniert ist, dass er senkrecht zu einer Fläche einer Wand weist, in der der Fenster- oder Türrahmen angeordnet ist.

16. Verfahren zur Herstellung einer Schichtholzkomponente nach einem der Ansprüche 1-15, umfassend:
a) Bereitstellen eines Rohlings, der aus einer Vielzahl von länglichen Holzlamellen gebildet ist, wobei
die Lamellen entlang einer Hauptfaserrichtung eines Stamms ausgebildet sind,
jede der Lamellen einen im Wesentlichen trapezförmigen Querschnitt aufweist, und
Holzlamellen eine jeweilige planare Hauptgrundfläche, die an einem radial äußeren Teil des Stamms ausgebildet ist, und eine jeweilige planare Nebengrundfläche, die an einem radial inneren Teil des Stamms ausgebildet ist, aufweisen, wobei die Lamellen als mindestens eine Schicht angeordnet sind, in der planare Hauptgrundflächen von unmittelbar benachbarten Lamellen in entgegengesetzte Richtungen weisen,
b) Schneiden des Rohlings entlang mindestens einer Ebene, die senkrecht zu dem trapezförmigen Querschnitt ist, wodurch ein Schichtholz-Zwischenprodukt gebildet wird, und
c) Herstellen der Schichtholzkomponente durch Profilschneiden oder Hobeln entlang mindestens einer Ebene, die senkrecht zu dem trapezförmigen Querschnitt ist, sodass die Schichtholzkomponente Teile von mindestens zwei benachbarten Lamellen umfasst,
wobei die Holzkomponente ein Paar von benachbarten, nach außen exponierten, sich längs erstreckenden Flächen (F2, F3; F4, F5) mit einer jeweiligen positiven Flächennormale, die sich von der Fläche nach außen, weg von dem durch die Fläche begrenzten Körper, erstreckt, aufweist, wobei die jeweiligen positiven Flächennormalen einander kreuzen, vorzugsweise in einem Winkel von mehr als 20°, mehr als 30°, mehr als 45°, mehr als 75° oder etwa 90°.

17. Verfahren nach Anspruch 16, wobei das Schneiden ein Schneiden des Rohlings entlang mindestens einer ersten Schnittebene, die im Wesentlichen senkrecht zu den Grundflächen ist, und ein Schneiden des Rohlings entlang mindestens einer zweiten Schnittebene, die im Wesentlichen parallel zu den Grundflächen ist, umfasst, wobei sich beide der Schnittebenen im Wesentlichen senkrecht zu dem trapezförmigen Querschnitt erstrecken.

18. Verfahren nach Anspruch 16 oder 17, wobei das Holzzwischenprodukt durch ein Paar von ersten Schnittebenen gebildet wird, die so positioniert sind, dass das Holzzwischenprodukt Teile von mindestens drei Lamellen, einschließlich einer mittleren Lamelle, die zwischen zwei äußeren Lamellen angeordnet ist, umfasst.

19. Verfahren nach Anspruch 18, wobei das Holzzwischenprodukt auch durch die zweite Schnittebene gebildet wird, wobei die zweite Schnittebene so positioniert ist, dass die mittlere Lamelle an einem Abschnitt des trapezförmigen Querschnitts gebildet ist, der näher zu einem Mark des Stamms als zu einer Rindenseite des Stamms ist.

20. Verfahren nach Anspruch 16 oder 17, wobei das Holzzwischenprodukt durch ein Paar von ersten Schnittebenen gebildet wird, die so positioniert sind, dass das Holzzwischenprodukt Teile von lediglich zwei benachbarten Lamellen umfasst.

21. Verfahren nach Anspruch 19 oder 20, wobei die zweite Schnittebene so positioniert ist, dass das Holzzwischenprodukt an einem Abschnitt des Stamms gebildet wird, der mehr als 20 % eines Stammradius entfernt von einem Mark des Stamms und weniger als 80 % des Stammradius entfernt von dem Mark liegt.

22. Verfahren nach einem der Ansprüche 16-21, das, vor der Herstellung des Schichtholzprodukts, ferner ein Verbinden von mindestens zwei Holzzwischenprodukten in einer durchgängigen Weise umfasst.

23. Verfahren nach einem der Ansprüche 16-22, das ferner ein Identifizieren eines Abschnitts des Rohlings, in dem eine Holzdichte, in Dickenrichtung des Rohlings betrachtet, ein Minimum aufweist, und ein Ausrichten eines Schnittmusters zum Schneiden des Holzzwischenprodukts basierend auf dem Minimum umfasst.

24. Verfahren nach einem der Ansprüche 16-23, das ferner ein Auflaminieren einer Stirnlamelle (300), die einen rechteckigen Querschnitt aufweist, auf eine Fläche des Holzzwischenprodukts, die einen Winkel von mehr als 45°, vorzugsweise mehr als 60° oder mehr als 70°, gegenüber einer Verbindungsebene aufweist, entlang der ein Paar von trapezförmigen Lamellen verbunden sind, umfasst.

25. Verfahren nach Anspruch 24, das ferner ein Ausbilden einer exponierten Fläche durch Schneiden in die Stirnlamelle umfasst.

26. Verfahren nach Anspruch 24 oder 25 in Verbindung mit Anspruch 19, das ferner ein Anordnen von mindestens zwei Stirnlamellenstücken (3000) auf der Fläche des Holzzwischenprodukts umfasst, wobei eine Verbindung zwischen Endabschnitten der Stirnlamellenstücke (3000) in einer Längsrichtung (L) der Komponente gegenüber einer Verbindung zwischen den mindestens zwei Holzzwischenprodukten versetzt ist.

27. Verfahren nach einem der Ansprüche 24-26, das ferner ein Anordnen von mindestens zwei Stirnlamellenstücken (3000) auf der Fläche des Holzzwischenprodukts derart, dass die benachbarten Endabschnitte von Stirnlamellenstücken (3000) voneinander beabstandet sind, umfasst.

28. Verfahren nach einem der Ansprüche 16-27, wobei das Bereitstellen des Rohlings ein Nassverleimen der Holzlamellen Seitenfläche an Seitenfläche miteinander umfasst, wobei das Nassverleimen ein Verleimen bei einem Feuchtigkeitsgehalt der Holzlamellen von mindestens 25 Gew.-% der Trockenmasse, vorzugsweise mindestens 30 Gew.-% der Trockenmasse, umfasst.

## Revendications

1. Composant en bois stratifié (250) destiné à être utilisé, par exemple, en tant que cadre de porte ou cadre de fenêtre,
dans lequel le composant en bois présente une paire de faces en extension longitudinale (F2, F3 ; F4, F5) adjacentes exposées vers l'extérieur, ayant une normale à la surface positive respective en extension vers l'extérieur à partir de la surface, en éloignement du corps délimité par la surface, dans lequel les normales à la surface respectives se croisent, de préférence selon un angle de plus de 20°, plus de 30°, plus de 45°, plus de 75° ou d'environ 90°, °, le composant présentant :
une section transversale et une direction longitudinale (C), perpendiculaire à la section transversale, et
une direction de fibre principale, qui est sensiblement perpendiculaire à la section transversale,
dans lequel la section transversale est sensiblement constante le long de la direction longitudinale,
dans lequel le produit en bois stratifié est formé d'au moins deux lamelles de bois (20a, 20b) adjacentes, qui sont jointes le long d'un plan de jonction (JP1, JP2),
dans lequel le composant en bois présente au moins deux faces en extension longitudinale (F1, F2, F3, F4, F5, F6), qui sont perpendiculaires à la section transversale, et qui sont aplanies et/ou profilées, dans lequel
le plan de jonction (JP1, JP2) présente :
un premier angle (A1) de 70° à 89°, de préférence de 80° à 89° par rapport à la section transversale, **caractérisé en ce que** l'angle de jonction présente :
un deuxième angle (A2) par rapport à une première face en extension longitudinale (F2, F4, F6), qui est perpendiculaire à la section transversale, ledit deuxième angle (A2) étant supérieur à 0° et inférieur à 90°, de préférence de 1° à 30°, de 60° à 89° ou de 45° à 89°, et
un troisième angle (A3) par rapport à une deuxième face en extension longitudinale (F1, F3, F5) qui est perpendiculaire à la section transversale et à la première face en extension longitudinale (F2, F4, F6), ledit troisième angle étant dans la plage de 1° à 20° ou de 5° à 15°.

2. Composant en bois selon la revendication 1, dans lequel une intersection entre le plan de jonction (JP1, JP2) et l'une des faces en extension longitudinale est espacée des deux intersections entre cette face en extension longitudinale et d'autres parmi les faces en extension longitudinale le long d'au moins 50 % d'une longueur du composant en bois, de préférence le long d'au moins 75 % ou d'au moins 99 % de la longueur du composant en bois.

3. Composant en bois selon l'une quelconque des revendications précédentes, dans lequel les lamelles de bois (20a, 20b) sont collées ensemble le long du plan de jonction (JP1, JP2) au moyen d'une colle qui est appropriée pour un collage humide, telle qu'une colle à base de polyuréthane.

4. Composant en bois selon l'une quelconque des revendications précédentes, dans lequel au moins l'une des faces en extension longitudinale comprend au moins deux portions, qui sont parallèles et séparées dans une direction normale à la face.

5. Composant en bois selon l'une quelconque des revendications précédentes, dans lequel, au niveau du plan de jonction (JP1, JP2), un rayon de courbure d'un cerne annuel de l'une des lamelles de bois est parallèle à +/- moins de 10°, de préférence moins de +/- 5° ou moins de +/- 1°, et dirigé de manière opposée à un rayon de courbure d'un cerne annuel de l'autre des lamelles de bois, pris le long du plan de jonction (JP1, JP2).

6. Composant en bois selon l'une quelconque des revendications précédentes, dans lequel le composant comprend une lamelle médiane (20b) intercalée entre une paire de lamelles externes (20a), dans lequel la lamelle médiane est formée à partir d'une portion d'une bille qui est plus proche du cœur que les lamelles marginales externes.

7. Composant en bois selon l'une quelconque des revendications précédentes, dans lequel les lamelles de bois (20a, 20b) sont collées ensemble le long d'un plan de jonction (JP1, JP2) qui est perpendiculaire à la section transversale.

8. Composant en bois selon l'une quelconque des revendications précédentes, comprenant en outre au moins une lamelle faciale, qui présente une section transversale rectangulaire.

9. Composant en bois selon la revendication 8, dans lequel la lamelle faciale est formée à partir d'une seule pièce de bois.

10. Composant en bois selon la revendication 8 ou 9, dans lequel au moins deux faces exposées du composant en bois sont formées dans la lamelle faciale, lesdites au moins deux faces exposées étant formées de telle sorte que leurs normales à la surface positives se croisent l'une l'autre, de préférence selon un angle de plus de 20°, plus de 30°, plus de 45° ou plus de 80°.

11. Composant en bois selon l'une quelconque des revendications 8 à 10, dans lequel une surface majeure de la lamelle faciale présente un angle supérieur à 45° par rapport à un plan de jonction en intersection avec la surface majeure, de préférence supérieur à 60° ou supérieur à 70°.

12. Composant en bois selon l'une quelconque des revendications 8 à 11, dans lequel, vus en section transversale, les cernes annuels de la lamelle faciale s'étendent selon un angle de plus de 45°, de préférence de plus de 55°, par rapport aux surfaces majeures de la lamelle faciale.

13. Composant en bois selon l'une quelconque des revendications précédentes, dans lequel les lamelles de bois sont choisies dans un groupe constitué par
les résineux, c'est-à-dire les espèces d'arbres gymnospermes, ayant une masse volumique de plus de 400 kg/m³, et
les feuillus, c'est-à-dire les espèces d'arbres angiospermes, ayant une masse volumique de plus de 400 kg/m³.

14. Composant en bois selon l'une quelconque des revendications précédentes, dans lequel le composant en bois présente une longueur le long de sa direction de fibres, qui est d'au moins 200 % d'une longueur le long d'une longueur la plus grande de sa section transversale, de préférence 300 % ou 500 %.

15. Cadre pour une fenêtre ou une porte comprenant une portion cadre qui est formée d'un composant en bois selon l'une quelconque des revendications précédentes et qui est positionnée pour faire face perpendiculairement à la surface d'un mur dans lequel le cadre de fenêtre ou de porte est agencé.

16. Procédé de formation d'un composant en bois stratifié selon l'une quelconque des revendications 1 à 15, comprenant :
a) la fourniture d'un billon, formé d'une pluralité de lamelles de bois allongées, dans lequel
les lamelles sont formées le long d'une direction de fibres principale d'une bille,
chacune des lamelles présente une section transversale sensiblement trapézoïdale, et
des lamelles de bois présentent une surface de base majeure plane respective qui est formée au niveau d'une partie radialement externe de la bille et une surface de base mineure plane respective qui est formée au niveau d'une partie radialement interne de la bille, l'agencement des lamelles sous la forme d'au moins une couche dans laquelle des surfaces de base majeures planes de lamelles immédiatement adjacentes font face à des directions opposées,
b) la coupe du billon le long d'au moins un plan qui est perpendiculaire à la section transversale trapézoïdale, moyennant quoi un produit en bois stratifié intermédiaire est formé, et
c) la formation du composant en bois stratifié par ébauchage ou rabotage le long d'au moins un plan qui est perpendiculaire à la section transversale trapézoïdale, de telle sorte que le composant en bois stratifié comprend des parties d'au moins deux lamelles adjacentes, dans lequel le composant en bois présente une paire de faces en extension longitudinale (F2, F3 ; F4, F5) adjacentes exposées vers l'extérieur, ayant une normale à la surface positive respective en extension vers l'extérieur à partir de la surface, en éloignement du corps délimité par la surface, dans lequel les normales à la surface respectives se croisent l'une l'autre, de préférence selon un angle de plus de 20°, plus de 30°, plus de 45°, plus de 75° ou d'environ 90°.

17. Procédé selon la revendication 16, dans lequel la coupe du billon comprend la coupe du billon le long d'au moins un premier plan de coupe qui est sensiblement perpendiculaire aux surfaces de base et la coupe du billon le long d'au moins un deuxième plan de coupe qui est sensiblement parallèle aux surfaces de base, les deux desdits plans de coupe s'étendant sensiblement perpendiculairement à la section transversale trapézoïdale.

18. Procédé selon la revendication 16 ou 17, dans lequel le produit en bois intermédiaire est formé par une paire de premiers plans de coupe, qui sont positionnés de telle sorte que le produit en bois intermédiaire comprend des parties d'au moins trois lamelles, comportant une lamelle médiane qui est intercalée entre deux lamelles externes.

19. Procédé selon la revendication 18, dans lequel le produit en bois intermédiaire est formé également par ledit deuxième plan de coupe, dans lequel le deuxième plan de coupe est positionné de telle sorte que la lamelle médiane est formée au niveau d'une portion de la section transversale trapézoïdale qui est plus proche d'un cœur de la bille que d'un côté d'écorce de la bille.

20. Procédé selon la revendication 16 ou 17, dans lequel le produit en bois intermédiaire est formé par une paire de premiers plans de coupe, qui sont positionnés de telle sorte que le produit en bois intermédiaire comprend des parties de seulement deux lamelles adjacentes.

21. Procédé selon la revendication 19 ou 20, dans lequel le deuxième plan de coupe est positionné de telle sorte que le produit en bois intermédiaire est formé au niveau d'une portion de la bille qui est éloignée d'un cœur de la bille de plus de 20 % d'un rayon de bille et éloignée d'un cœur de la bille de moins de 80 % du rayon de bille.

22. Procédé selon l'une quelconque des revendications 16 à 21, comprenant en outre la jonction d'au moins deux produits en bois intermédiaires d'une manière bout à bout avant ladite formation du produit en bois stratifié.

23. Procédé selon l'une quelconque des revendications 16 à 22, comprenant en outre l'identification d'une portion du billon dans lequel une masse volumique de bois est à un minimum, vue dans une direction d'épaisseur du billon, et l'alignement d'un motif de coupe pour couper le produit en bois intermédiaire sur la base dudit minimum.

24. Procédé selon l'une quelconque des revendications 16 à 23, comprenant en outre la stratification d'une lamelle faciale (300), qui présente une section transversale rectangulaire, sur une surface du produit en bois intermédiaire qui présente un angle de plus de 45°, de préférence plus de 60° ou plus de 70°, par rapport à un plan de jonction le long duquel une paire de lamelles trapézoïdales sont jointes.

25. Procédé selon la revendication 24, comprenant en outre la formation d'une face exposée par coupe dans ladite lamelle faciale.

26. Procédé selon la revendication 24 ou 25 conjointement avec la revendication 19, comprenant en outre l'agencement d'au moins deux pièces de lamelle faciale (3000) sur ladite surface du produit en bois intermédiaire, dans lequel une jonction des portions d'extrémité desdites pièces de lamelle faciale (3000) est décalée dans une direction longitudinale (L) du composant par rapport à une jonction entre lesdits au moins deux produits en bois intermédiaires.

27. Procédé selon l'une quelconque des revendications 24 à 26, comprenant en outre l'agencement d'au moins deux pièces de lamelle faciale (3000) sur ladite surface du produit en bois intermédiaire, de telle sorte que lesdites portions d'extrémité adjacentes de pièces de lamelle faciale (3000) sont espacées l'une de l'autre.

28. Procédé selon l'une quelconque des revendications 16 à 27, dans lequel la fourniture du billon comprend le collage humide des lamelles de bois l'une à l'autre par leurs surfaces latérales, dans lequel ledit collage humide comprend le collage à une teneur en humidité des lamelles de bois d'au moins 25 % en poids de masse sèche, de préférence d'au moins 30 % en poids de masse sèche.
